(19) Europäisches Patentamt / European Patent Office / Office européen des brevets

(11) **EP 3 680 959 B1**

(12) **EUROPEAN PATENT SPECIFICATION**

(45) Date of publication and mention of the grant of the patent:
**26.01.2022 Bulletin 2022/04**

(21) Application number: **20150457.8**

(22) Date of filing: **07.01.2020**

(51) International Patent Classification (IPC):
$H01M\ 4/04^{(2006.01)}$ $H01M\ 4/131^{(2010.01)}$
$H01M\ 10/052^{(2010.01)}$ $H01M\ 10/0562^{(2010.01)}$
$H01M\ 4/02^{(2006.01)}$

(52) Cooperative Patent Classification (CPC):
**H01M 4/0407; H01M 4/131; H01M 10/052; H01M 10/0562;** H01M 2004/028; Y02E 60/10

(54) **POSITIVE ELECTRODE FOR SOLID-STATE SECONDARY BATTERY, METHOD OF PREPARING THE SAME, POSITIVE ELECTRODE ASSEMBLY FOR SOLID-STATE SECONDARY BATTERY INCLUDING THE SAME, AND SOLID-STATE SECONDARY BATTERY INCLUDING THE SAME**

POSITIVE ELEKTRODE FÜR EINE FESTKÖRPERSEKUNDÄRBATTERIE, HERSTELLUNGSVERFAHREN DAFÜR, POSITIVE ELEKTRODENANORDNUNG FÜR EINE FESTKÖRPERSEKUNDÄRBATTERIE DAMIT UND FESTKÖRPERSEKUNDÄRBATTERIE DAMIT

ÉLECTRODE POSITIVE POUR BATTERIE SECONDAIRE À ÉLECTRLYTE SOLIDE, SON PROCÉDÉ DE PRÉPARATION, ENSEMBLE ÉLECTRODE POSITIVE POUR BATTERIE SECONDAIRE À ÉLECTRLYTE SOLIDE L COMPRENANT ET BATTERIE SECONDAIRE À ÉLECTRLYTE SOLIDE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2019 US 201962789812 P**
**25.03.2019 US 201962823509 P**
**02.07.2019 US 201916459896**
**30.10.2019 KR 20190136947**

(43) Date of publication of application:
**15.07.2020 Bulletin 2020/29**

(73) Proprietors:
• **Samsung Electronics Co., Ltd.**
**Gyeonggi-do 16677 (KR)**
• **The Regents of the University of California**
**Oakland, CA 94607 (US)**

(72) Inventors:
• **CEDER, Gerbrand**
**Mountain View, CA California 94043 (US)**
• **TU, Qingsong**
**Mountain View, CA California 94043 (US)**
• **SHI, Tan**
**Mountain View, CA California 94043 (US)**
• **MIARA, Lincoln**
**Mountain View, CA California 94043 (US)**

(74) Representative: **Elkington and Fife LLP**
**Prospect House**
**8 Pembroke Road**
**Sevenoaks, Kent TN13 1XR (GB)**

(56) References cited:
DE-A1-102014 226 396  US-A1- 2013 040 206
US-A1- 2016 181 657  US-A1- 2017 092 987
US-A1- 2017 092 988  US-A1- 2018 114 979

**Description**

FIELD OF THE INVENTION

The present disclosure relates to a positive electrode for solid-state secondary batteries, a method of preparing the positive electrode, a positive electrode assembly for a solid-state secondary battery including the positive electrode, and a solid-state secondary battery including the positive electrode.

BACKGROUND OF THE INVENTION

Solid-state secondary batteries are of interest as they provide improved power density as well as improved energy density and safety.

However, there is a performance gap between currently available solid-state secondary batteries and lithium-ion batteries using flammable liquid electrolytes. Safety and performance of positive electrodes in solid-state secondary batteries that have been developed up until now have not reached the desired level, and thus an improved solid-state lithium-ion positive electrode material and a solid-state secondary battery including the same are needed.

US 2016/181657 discloses a solid electrolyte comprising a ramsdellite-type crystal structure.

US 2017/092987 and US 2017/092988 disclose a method of manufacturing an electrode laminate, which includes an active material layer and a solid electrolyte layer formed on the active material layer.

DE 10 2014 226396 discloses a composite cathode which includes a collector, an active cathode material, a binder, a solid inorganic lithium-ion conductor and a liquid electrolyte.

US 2013/040206 discloses an all solid state secondary battery comprising a positive electrode that has a positive electrode active material layer, a negative electrode that has a negative electrode active material layer, and a solid electrolyte layer that is arranged between the positive and negative electrode active material layers.

US 2018/114979 discloses an active material composite particle which serves as an active material for an electrode of an all-solid battery.

SUMMARY OF THE INVENTION

Provided is a novel positive electrode for a solid-state secondary battery.

Provided is a positive electrode assembly for a solid-state secondary battery including the positive electrode for a solid-state secondary battery.

Provided is a solid-state secondary battery including the positive electrode. Provided is a method of preparing the positive electrode.

Additional aspects will be set forth in part in the description which follows and, in part, will be apparent from the description, or may be learned by practice of the presented embodiments of the disclosure.

According to an aspect of the invention, a positive electrode for a solid-state secondary battery is provided in accordance with claim 1.

According to an embodiment of the invention, a positive electrode assembly for a solid-state secondary battery includes the positive electrode; and a second solid electrode disposed on the positive electrode, wherein the first solid electrolyte and the second solid electrolyte may be identical to or different from each other.

According to another embodiment of the invention, a solid-state secondary battery includes the positive electrode; a negative electrode; and a second solid electrolyte disposed between the positive electrode and the negative electrode, wherein the first solid electrolyte and the second solid electrolyte may be identical to or different from each other. Also, the first solid electrolyte and the second solid electrolyte may be a sulfide solid electrolyte, an oxide solid electrolyte, or a combination thereof.

According to another aspect of the invention, a method of preparing a positive electrode for a solid-state secondary battery includes providing a positive active material;

providing a first solid electrolyte; and
contacting the positive active material and the first solid electrolyte
at a pressure in a range of 50 megaPascals (MPa) to 600 MPa to provide a positive electrode.

BRIEF DESCRIPTION OF THE DRAWINGS

The above and other aspects, features, and advantages of certain embodiments of the disclosure will be more apparent from the following description taken in conjunction with the accompanying drawings, in which:

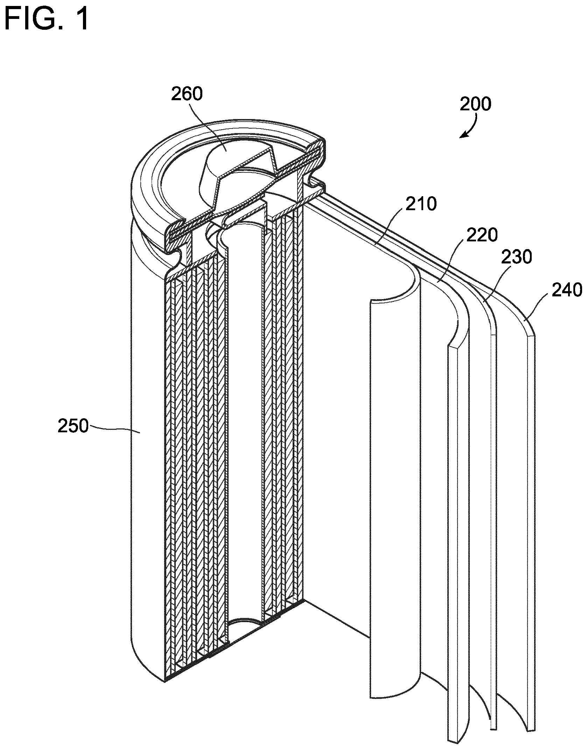

FIG. 1 is a schematic view of a battery according to an embodiment;

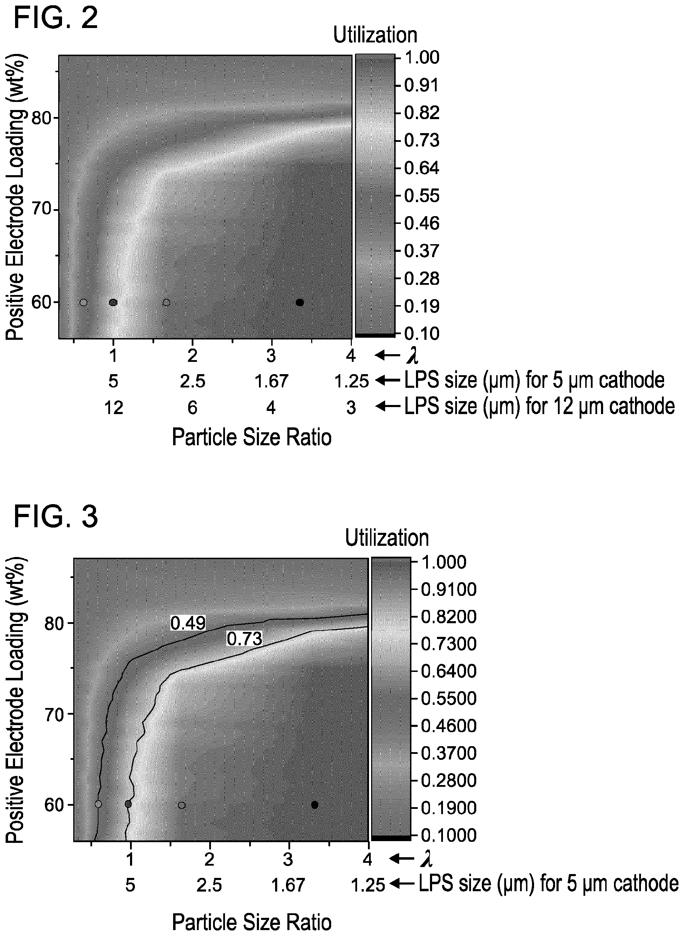

FIG. 2 is a graph of positive electrode loading (weight percent, wt%) versus the ratio λ of the positive active material particle size to the first solid electrolyte particle size, the graph illustrating positive electrode utilization (percent, %) as a function of positive electrode loading and λ when a particle size of the positive active material is in a range of about 5 μm to about 12 μm;

FIG. 3 is a graph of positive electrode loading (wt%) versus the ratio λ of the positive active material particle size to the first solid electrolyte particle size, the graph illustrating positive electrode utilization (%) as a function of positive electrode loading and λ when using 5 μm NCM and $Li_2P-P_2S_5$ (LPS) having a size of 1.5 μm, 3 μm, 5 μm, or 8 μm as a first solid electrolyte;

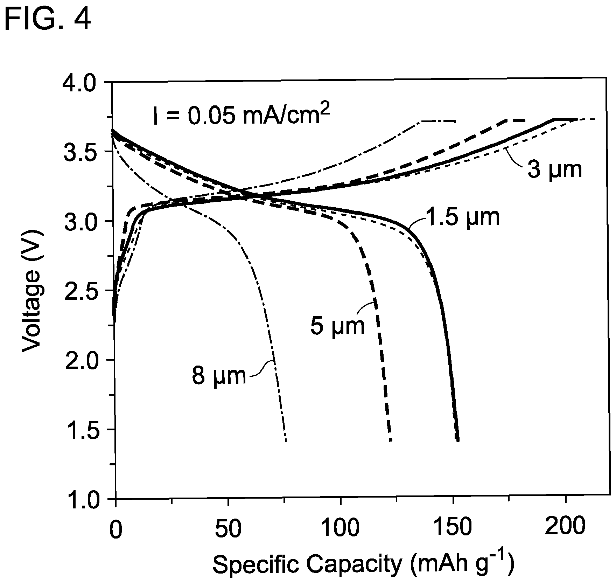

FIG. 4 is a graph of voltage (volts, V, versus Li-In alloy) to specific capacity (milliampere-hours per gram, mAh/g) illustrating a charge-discharge curve of a battery when the battery is discharged at 0.05 milliamperes per square centimeter ($mAh/cm^2$), wherein the battery uses 5 μm lithium nickel cobalt manganese oxide NCM523, NCM having a positive electrode loading of 60 wt% based on a total weight of the positive electrode, and a first solid electrolyte size of 1.5 μm, 3 μm, 5 μm, or 8 μm;

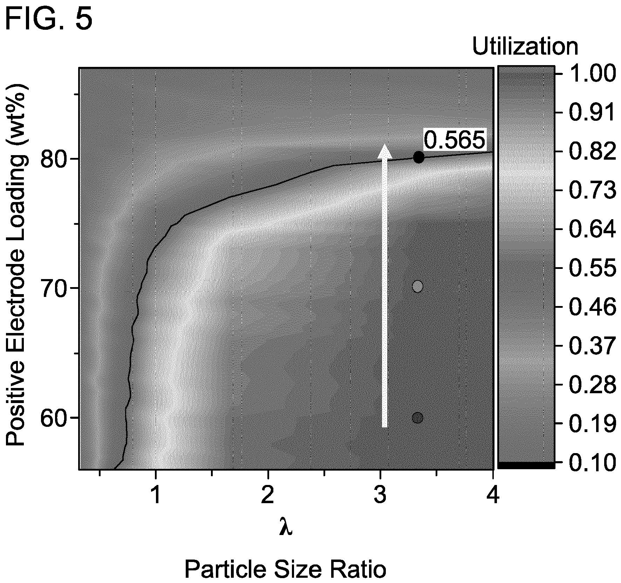

FIG. 5 is a graph of positive electrode loading (wt%) versus the ratio λ of the positive active material particle size to the first solid electrolyte particle size, the graph illustrating positive electrode utilization (%) as a function of positive electrode loading and λ when using 5 μm NCM and LPS having a size of 1.5 μm as a first solid electrolyte;

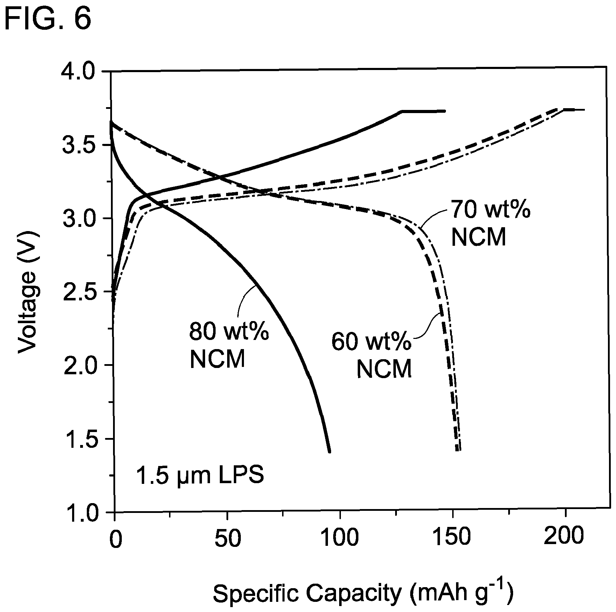

FIG. 6 is a graph of voltage (V versus Li-In alloy) to specific capacity (mAh/g) illustrating the discharge voltage on discharge at 0.05 $mA/cm^2$ for cells using 5 μm lithium nickel cobalt manganese oxide NCM523 and NCM having a positive electrode loading of 60 wt%, 70 wt%, or 80 wt% based on a total weight of the positive electrode, wherein a first solid electrolyte has a size of 1.5 μm, and the ratio λ is 3.3;

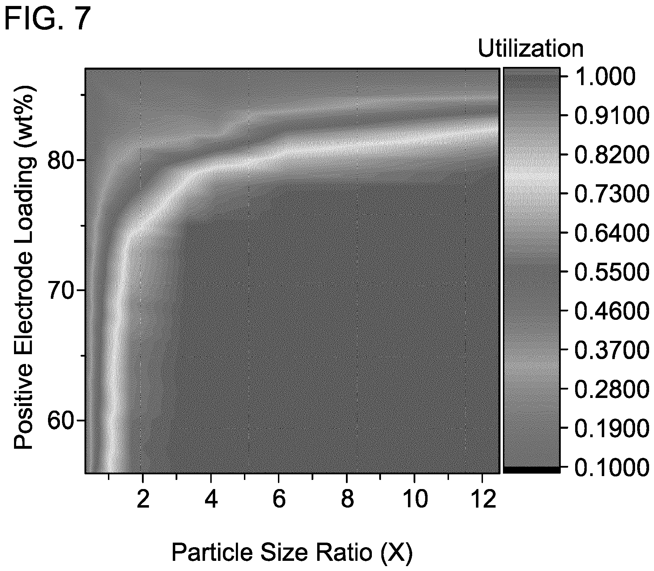

FIG. 7 is a graph of positive electrode loading (wt%) versus the ratio λ of the positive active material particle size to the first solid electrolyte particle size, the graph illustrating positive electrode utilization (%) as a function of positive electrode loading and λ; and

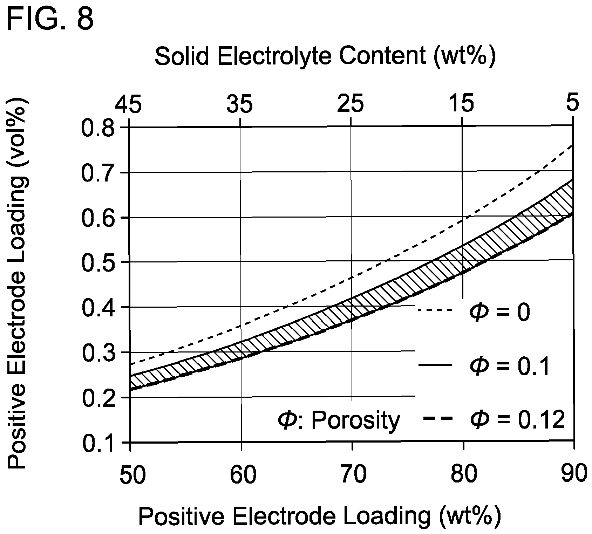

FIG. 8 is a graph of positive active material loading (volume percent, vol%) versus positive electrode loading (wt%) and first solid electrolyte amount (wt%) when porosity is 0 %, 10 %, and 20 %.

The above described and other features are exemplified by the following figures and detailed description.

## DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, a solid-state positive electrode according to an embodiment, a method of preparing the positive electrode, and a battery including the positive electrode will be described in detail.

The terms used herein are merely used to describe particular embodiments, and are not intended to limit the inventive concept. An expression used in the singular encompasses the expression of the plural, unless it has a clearly different meaning in the context.

As used herein, it is to be understood that the terms such as "including," "having," and "comprising" are intended to indicate the existence of the features, numbers, steps, actions, components, parts, ingredients, regions, materials, or combinations thereof disclosed in the specification, and are not intended to preclude the possibility that one or more other features, numbers, steps, actions, components, parts, ingredients, regions, materials, or combinations thereof may exist or may be added. As used herein, the term "or" may be interpreted as "and" or "or" according to the context.

As used herein, the term "and/or" includes any and all combinations of one or more of the associated listed items.

In the drawings, the thickness of layers and regions are exaggerated for clarity. Like reference numerals in the drawings denote like elements. It will be understood that when a component, such as a layer, a film, a region, or a plate, is referred to as being "on" another component, the component may be directly on the other component or intervening components may be present thereon. It will be understood that while such terms as "first," "second," etc., may be used to describe various components, such components must not be limited to the above terms. The above terms are used only to distinguish one component from another.

Solid-state secondary batteries are of interest as they have no safety issue associated with liquid electrolytes and provide higher energy density compared to that of liquid electrolytes. However, effects that are not present in lithium secondary batteries using liquid electrolytes, such as degradation of solid electrolytes resulting from reaction of the solid electrolyte and conductive diluents used in positive electrodes developed for liquid electrolytes, highlights significant differences between materials for solid-state lithium or lithium-ion batteries and those for lithium or lithium-ion batteries using liquid electrolytes. Thus materials developed for lithium or lithium-ion batteries using liquid electrolytes, in particular those using a lithium nickel oxide positive active material, e.g., an NCM of the formula $Li_{1+x}(Ni_{1-x-y-z}Co_yMn_z)_{1-z}O_2$, have been shown to be unsuitable for use in solid-state lithium or lithium-ion batteries.

Recently publications espouse use of small particle size NCM positive active material, e.g., a D50 particle size of less than 4 $\mu$m, to overcome charge transport restrictions. While not wanting to be bound by theory, it is understood that when the positive active material is considered alone, charge transport restrictions in a positive active material, such as NCM, motivate use of small particle sizes, e.g., 4 $\mu$m or less. It has been discovered that the interactions between the positive active material and the solid electrolyte are often more significant than charge transport restrictions in the positive active material. In detail, ionic transport limitations at particle surfaces and between positive active material particles and solid electrolyte particles have been discovered to be of such significance that improved performance may be provided by using a selected combination of positive active material particle size and solid electrolyte particle size, particularly when using a nickel-containing positive active material, such as NCM. In particular, and while not wanting to be bound by theory, the interactions suggest that when using a positive active material such as NCM in combination with a solid electrolyte, use of a positive active material having a relatively large particle size in combination with a solid electrolyte having a relatively small particle size may provide improved performance.

Provided is a positive electrode for a solid-state secondary battery. The positive electrode includes a positive active material and a first solid electrolyte, wherein a ratio $\lambda$ of an average particle diameter of the positive active material to an average particle diameter of the first solid electrolyte satisfies Equation 1, wherein an average particle diameter of the positive active material is in a range of 5 $\mu$m to 12 $\mu$m, and an average particle diameter of the first solid electrolyte is in a range of 1.5 $\mu$m to 4 $\mu$m:

$$\text{Equation 1}$$

$$3 \leq \lambda \leq 40$$

An amount of the positive active material is in a range of 70 wt% to 95 wt% based on a total weight of the positive electrode.

The ratio $\lambda$ of an average particle diameter of the positive active material to an average particle diameter of the first solid electrolyte may be in a range of 3.3 to 8, for example about 4 to 8.

In an embodiment, an amount of the positive active material is in a range of 70 weight% (wt%) to about 85 wt% based on a total weight of the positive electrode.

When a positive active material having a large average particle diameter of about 4 $\mu$m or more is used in combination with a solid electrolyte having a relatively small particle size, performance of the solid state secondary battery may improve. When an average particle diameter of the positive active material, an average particle diameter of the first solid electrolyte, and an amount of the positive active material are within these ranges, the positive electrode having a high energy density may be prepared even when the positive active material having a large average particle diameter of about 4 $\mu$m or more is used.

The positive active material may include a lithium transition metal oxide and a transition metal sulfide. For example, the positive active material may be a lithium composite oxide including lithium and a metal selected from cobalt, manganese, and nickel. For example, the positive active material may be selected from compounds represented by Formulae:

$Li_pM^1_{1-q}M^2_qD_2$ (wherein $0.90 \leq p \leq 1.8$ and $0 \leq q \leq 0.5$); $Li_pE_{1-q}M^2_qO_{2-x}D_x$ (wherein $0.90 \leq p \leq 1.8$, $0 \leq q \leq 0.5$, and $0 \leq x < 0.05$); $LiE_{2-q}M^2_qO_{4-x}D_x$ (wherein $0 \leq q \leq 0.5$ and $0 \leq x \leq 0.05$); $Li_pNi_{1-q-r}CO_qM^2_rD_x$ (wherein $0.90 \leq p \leq 1.8$, $0 \leq q \leq 0.5$, $0 \leq r \leq 0.05$, and $0 < x \leq 2$); $Li_pNi_{1-q-r}Co_pM^2_rO_{2-x}X_x$ (wherein $0.90 \leq p \leq 1.8$, $0 \leq q \leq 0.5$, $0 \leq r \leq 0.05$, and $0 < x < 2$); $Li_pNi_{1-q-r}Co_pM^2_rO_{2-x}X_x$ (wherein $0.90 \leq p \leq 1.8$, $0 \leq q \leq 0.5$, $0 \leq r \leq 0.05$, and $0 < x < 2$); $Li_pNi_{1-q-r}Mn_qM^2_rD_x$ (wherein $0.90 \leq p \leq 1.8$, $0 \leq q \leq 0.5$, $0 \leq r \leq 0.05$, and $0 < x < 2$); $Li_pNi_{1-q-r}Mn_q M^2_rO_{2-p}X_x$ (wherein $0.90 \leq p \leq 1.8$, $0 \leq q \leq 0.5$, $0 \leq r \leq 0.05$, and $0 < x < 2$); $Li_pNi_{1-q-r}Mn_qM^2_rO_{2-x}X_x$ (wherein $0.90 \leq p \leq 1.8$, $0 \leq q \leq 0.5$, $0 \leq r \leq 0.05$, and $0 < x < 2$); $Li_pNi_qE_rG_dO_2$ (wherein $0.90 \leq p \leq 1.8$, $0 \leq q \leq 0.9$, $0 \leq r \leq 0.5$, and $0.001 \leq d \leq 0.1$); $Li_pNi_qCo_rMn_dGeO_2$ (wherein $0.90 \leq p \leq 1.8$, $0 \leq q \leq 0.9$, $0 \leq r \leq 0.5$, $0 \leq d \leq 0.5$, and $0.001 \leq e \leq 0.1$); $Li_pNiG_qO_2$ (wherein $0.90 \leq p \leq 1.8$ and $0.001 \leq q \leq 0.1$); $Li_pCoG_qO_2$ (wherein $0.90 \leq p \leq 1.8$ and $0.001 \leq q \leq 0.1$); $Li_pMnG_qO_2$ (wherein $0.90 \leq p \leq 1.8$ and $0.001 \leq q \leq 0.1$); $Li_pMn_2G_qO_4$ (wherein $0.90 \leq p \leq 1.8$ and $0.001 \leq q \leq 0.1$); $QO_2$; $QS_2$; $LiQS_2$; $V_2O_5$; $LiV_2O_5$; $LiRO_2$; $LiNiVO_4$; $Li_{(3-f)}J_2(PO_4)_3$ (wherein $0 \leq f \leq 2$); $Li_{(3-f)}Fe_2(PO_4)_3$ (wherein $0 \leq f \leq 2$); and $LiFePO_4$.

In Formulae, $M^1$ is Ni, Co, or Mn; $M^2$ is Al, Ni, Co, Mn, Cr, Fe, Mg, Sr, V, or a rare-earth element; D is O, F, S, or P; E is Co or Mn; X is F, S, or P; G is Al, Cr, Mn, Fe, Mg, La, Ce, Sr, or V; Q is Ti, Mo, or Mn; R is Cr, V, Fe, Sc, or Y; J is V, Cr, Mn, Co, Ni, or Cu.

Examples of the positive active material may include $LiCoO_2$, $LiMn_xO_{2x}$ (wherein x=1 or 2), $LiNi_{1-x}Mn_xO_2$ (wherein $0 < x < 1$), $LiNi_{1-x-y}Co_xMn_yO_2$ (wherein $0 \leq x \leq 0.5$ and $0 \leq y \leq 0.5$), $LiFePO_4$, $TiS_2$, $FeS_2$, $TiS_3$, $FeS_3$, or a combination

thereof.

In an embodiment, the positive active material may include, for example, a lithium cobalt oxide, a lithium nickel cobalt manganese oxide, a lithium nickel cobalt aluminum oxide, or a combination thereof.

The positive active material may be, for example, a NCA or NCM material represented by Formula 1:

$$\text{Formula 1} \qquad Li_xNi_yE_zG_dO_2$$

In Formula 1, $0.90 \leq x \leq 1.8$, $0 \leq y \leq 0.9$, $0 \leq z \leq 0.5$, $0.001 \leq d \leq 0.5$, $0.001 \leq y+z+d \leq 1$, E is Co, and G is Al, Cr, Mn, Fe, Mg, La, Ce, Sr, V, or a combination thereof. For example, $y+z+d$ is 1.

In Formula 1, y is 0.5, E is Co, G is Mn, z is 0.2, and d is 0.3. Examples of the positive active material may include $LiNi_{0.5}CO_{0.2}Mn_{0.3}O_2$ (NCM) and $LiNi_{0.5}Co_{0.3}Mn_{0.2}O_2$.

The positive active material may be, for example, a nickel-based active material represented by Formula 2.

$$\text{Formula 2} \qquad Li_a(Ni_{1-x-y-z}Co_xMn_yM_z)O_2$$

In Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al),

and $0.95 \leq a \leq 1.3$, $0 < x < 1$, $0 \leq y < 1$, and $0 \leq z < 1$.

The positive active material may be, for example, a compound of Formula 3, a compound of Formula 4, or a combination thereof.

$$\text{Formula 3} \qquad LiNi_xCo_yAl_zO_2$$

In Formula 3, $0 < x < 1$, $0 < y < 1$, $0 < z < 1$, and $x+y+z=1$.

$$\text{Formula 4} \qquad LiNi_xCo_yMn_zO_2$$

In Formula 4, $0 < x < 1$, $0 < y < 1$, $0 < z < 1$, and $x+y+z=1$.

In Formulae 3 and 4, x may be, for example, in a range of about 0.7 to about 0.99, about 0.75 to about 0.95, about 0.8 to about 0.95, or about 0.85 to about 0.95. In Formulae 3 and 4, when x is within these ranges, an amount of nickel of the positive active material may be in a range of about 70 mol% to about 99 mol%.

The positive active material may be covered by a coating layer. The coating layer may be any material that may be used as a coating layer of a solid-state secondary battery in the art. The coating layer may be, for example, $Li_2O\text{-}ZrO_2$.

A positive electrode may include a positive active material and a first solid electrolyte. In one embodiment, the positive electrode may consist of a positive active material and a first solid electrolyte.

The positive electrode may include, for example, additives such as a conducting agent, a binder, a filler, a dispersant, an ion conducting agent in addition to the positive active material and the solid electrolyte. Examples of the conducting agent may include graphite, carbon black, acetylene black, ketjen black, carbon fibers, and a metal powder. Examples of the binder may include styrene butadiene rubber (SBR), polytetrafluoroethylene, polyvinylidene fluoride, and polyethylene. The filler, the dispersant, and the ion conducting agent that may be added to the positive electrode may be materials that are generally used in an electrode of a solid-state secondary battery.

The first solid electrolyte may include a sulfide solid electrolyte. Examples of the sulfide solid electrolyte may include $Li_2S\text{-}P_2S_5$, $Li_2S\text{-}P_2S_5\text{-}LiX$, wherein X is a halogen element, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$, wherein m and n are positive numbers, Z is one of Ge, Zn, or Ga, $Li_2S\text{-}GeS_2$, $Li_2S\text{-}SiS_2\text{-}Li_3PO_4$, $Li_2S\text{-}SiS_2\text{-}Li_pM^1O_q$, wherein p and q are positive numbers, $M^1$ is P, Si, Ge, B, Al, Ga, or In, $Li_{7-x}PS_{6-x}Cl_x$ wherein $0<x<2$, $Li_{7-x}PS_{6-x}Br_x$ wherein $0<x<2$, or $Li_{7-x}PS_{6-x}I_x$ wherein $0<x<2$.

When $Li_2S\text{-}P_2S_5$ is used as a sulfide solid electrolyte that forms the solid electrolyte, a mixing mole ratio of $Li_2S$ and $P_2S_5$ may be in a range of about 50:50 to about 90:10 ($Li_2S\text{:}P_2S_5$).

The sulfide solid electrolyte may be, for example, an argyrodite-type compound that includes at least one selected from $Li_{7-x}PS_{6-x}Cl_x$ wherein $0 \leq x \leq 2$, $Li_{7-x}PS_{6-x}Br_x$ wherein $0 \leq x \leq 2$, and $Li_{7-x}PS_{6-x}I_x$ wherein $0 \leq x \leq 2$. In particular, the sulfide solid electrolyte may be an argyrodite-type compound that includes at least one selected from $Li_6PS_5Cl$, $Li_6PS_5Br$, and $Li_6PS_5I$.

A density of the solid electrolyte of an argyrodite-type may be in a range of about 1.5 g/cc to about 2.0 g/cc. When the solid electrolyte of an argyrodite-type has a density of at least 1.5 g/cc, an internal resistance of the solid-state secondary battery may decrease, and penetration of a solid electrolyte layer by lithium may be effectively suppressed.

In another embodiment, a sulfide solid electrolyte may be a compound represented by Formula 5.

$$\text{Formula 5} \qquad (Li_{1-x}M1_x)_{7-y}PS_{6-y}M2_y$$

In Formula 5, x and y may be $0<x\leq0.07$ and $0\leq y\leq2$.

In Formula 5, for example, M1 may be Na, K, or a combination thereof; and M2 may be F, Cl, Br, I, or a combination thereof.

The compound of Formula 5 may have an ion conductivity of $1\times10^{-5}$ S/cm or higher, for example, $1\times10^{-4}$

S/cm or higher $1\times10^{-3}$ S/cm or higher or $1\times10^{-3}$ S/cm to 20 S/cm. The sulfide solid electrolyte has stability with respect to a metal lithium and a high ion conductivity at the same time.

Examples of the compound of Formula 5 may include $(Li_{5.6925}Na_{0.0575})PS_{4.75}Cl_{1.2}$, $(Li_{5.6925}Na_{0.0575})PS_{4.5}Cl_{1.5}$, $Li_{5.445}Na_{0.055})PS_{4.5}Cl_{1.5}$, $(Li_{5.148}Na_{0.052})PS_{4.2}Cl_{1.8}$, and $(Li_{5.8905}Na_{0.0595})PS_{4.95}Cl_{1.05}$.

The first solid electrolyte may be an oxide solid electrolyte.

The first solid electrolyte may be, for example, $Li_{1+x+y}Al_xTi_{2-x}Si_yP_{3-y}O_{12}$ (wherein $0<x<2$ and $0\leq y<3$), $BaTiO_3$, $Pb(Zr_{(1-x)}Ti_x)O_3$ (wherein $0\leq x\leq1$), $Pb_{1-x}La_xZr_{1-y}Ti_yO_3$ (wherein $0\leq x<1$ and $0\leq y<1$), $Pb(Mg_{1/3}Nb_{2/3})O_3$-$PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $SiC$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al_{(1-m)}Ga_m)_x(Ti_{(1-n)}Ge_n)_{2-x}Si_yP_{3-y}O_{12}$ (wherein $0\leq x\leq1$, $0\leq y\leq1$, $0\leq m\leq1$, and $0\leq n\leq1$), $Li_xLa_yTiO_3$ (wherein $0<x<2$ and $0<y<3$), $Li_xGe_yP_zS_w$ (wherein $0<x<4$, $0<y<1$, $0<z<1$, and $0<w<5$), $Li_xN_y$ (wherein $0<x<4$ and $0<y<2$), $SiS_2$, $Li_xSi_yS_z$ (wherein $0<x<3$, $0<y<2$, and $0<z<4$), $Li_xP_yS_z$ (wherein $0<x<3$, $0<y<3$, and $0<z<7$), $Li_2O$, $LiF$, $LiOH$, $Li_2CO_3$, $LiAlO_2$, a $Li_2O$-$Al_2O_3$-$SiO_2$-$P_2O_5$-$TiO_2$-$GeO_2$ ceramic, a garnet ceramic of the formula $Li_{3+x}La_3M^1_2O_{12}$ (wherein $M^1$ is Te, Nb, or Zr, and x is an integer of 1 to 10), a compound of Formula 5, or a combination thereof.

$$\text{Formula 5} \qquad (Li_{1-x}M1_x)_{7-y}PS_{6-y}M2_y$$

In Formula 5, $0<x\leq0.07$, $0\leq y\leq2$, M1 is Na, K, or a combination thereof, and M2 is F, Cl, Br, I, or a combination thereof.

The oxide solid electrolyte may be, for example, $(La_{1-x}Li_x)TiO_3$ (LLTO) (wherein $0<x<1$).

The oxide solid electrolyte may be, for example, a compound represented by Formula 6.

$$\text{Formula 6} \qquad Li_{5+x}E_3(Me^1_zMe^2_{(2-z)})O_d$$

In Formula 6, E is a trivalent cation, $Me^1$ and $Me^2$ are each independently one of a trivalent cation, a tetravalent cation, a pentavalent cation, and a hexavalent cation, wherein $0<x\leq3$ and $0\leq z<2$, and $0<d\leq12$; O may be optionally partially or totally substituted with a pentavalent anion, a hexavalent anion, a heptavalent anion, or a combination thereof.

For example, E may be partially substituted with a monovalent or divalent cation.

In another embodiment, for example, in the Formula 6, when $0<x\leq2.5$, E may be La, and $Me^2$ may be Zr.

In one embodiment, the oxide may be a compound represented by Formula 7.

$$\text{Formula 7} \qquad Li_{5+x+2y}(D_yE_{3-y})(Me^1_zMe^2_{2-z})O_d$$

In Formula 7, D is a monovalent or divalent cation; E is a trivalent cation; $Me^1$ and $Me^2$ are each independently a trivalent, tetravalent, pentavalent, or hexavalent cation; $0<x+2y\leq3$, $0\leq y\leq0.5$, $0\leq z<2$, and $0<d\leq12$; and O may be optionally partially or totally substituted with a pentavalent anion.

The moles number of lithium in the above formula is $6<(5+x+2y)<7.2$, $6.2<(5+x+2y)<7$, or $6.4<(5+x+2y)<6.8$. In Formulas 6 and 7, the anion has a valence of -1, -2 or -3.

In the garnet-type oxide of the above formula, D may be potassium (K), rubidium (Rb), cesium (Cs), calcium (Ca), barium (Ba), or strontium (Sr). In an embodiment, D may be calcium (Ca), barium (Ba), or strontium (Sr).

In the above formulae, $Me^1$ and $Me^2$ may be a metal. For example, $Me^1$ and $Me^2$ may be tantalum (Ta), niobium (Nb), yttrium (Y), scandium (Sc), tungsten (W), molybdenum (Mo), antimony (Sb), bismuth (Bi), hafnium (Hf), vanadium (V), germanium (Ge), silicon (Si), aluminum (Al), gallium (Ga), titanium (Ti), cobalt (Co), indium (In), zinc (Zn), or chromium (Cr). Provided is $Li_{6.5}La_3Zr_{1.5}Ta_{0.5}O_{12}$.

Improved performance of the solid state secondary battery may be provided when a ratio of an average particle diameter of the positive active material to an average particle diameter of the first solid electrolyte is $3\leq\lambda\leq40$, wherein the positive active material has an average particle diameter in a range of 5 $\mu$m to 12 $\mu$m, and wherein the first solid electrolyte has an average particle diameter in a range of 1.5 $\mu$m to 4 $\mu$m. As described above, contrary to the prior teaching, use of a relatively large positive active material particle size in combination with a relatively small particle size of a solid electrolyte may provide improved performance.

The average particle diameter of the positive active material may be in a range of about 6 $\mu$m to 12 $\mu$m, about 8 $\mu$m to 12 $\mu$m, or about 10 $\mu$m to 12 $\mu$m. The average particle diameter of the first solid electrolyte may be in a range of 1.5 $\mu$m to about 3.8 $\mu$m, 1.5 $\mu$m to about 3.6 $\mu$m, 1.5 $\mu$m to about 3.4 $\mu$m, 1.5 $\mu$m to about 3.2 $\mu$m, or 1.5 $\mu$m to about 3 $\mu$m. When the positive active material and the first solid electrolyte have a size within these ranges, improved performance of the solid state secondary battery may be provided.

As used herein, the term "average particle size," "average particle diameter," or "D50 particle size" refers to a particle diameter corresponding to 50 % of the particles in a distribution curve in which particles are accumulated in the order of particle diameter from the smallest particle to the largest particle, and a total number of accumulated particles is 100 %. For example, the average particle size may be measured by methods known to those of skill in the art. For example, the average particle size may be as determined with a commercially available particle size analyzer by, e.g., dynamic light scattering, or may be measured using a transmission electron microscope (TEM) or a scanning electron microscope (SEM). When TEM or SEM is used to measure an average particle size, a value obtained from a longest particle in average may be used as the average particle size. Here, the longest particle in average may refer to, for example, a particle having a longitudinal axis of the longest length.

In one embodiment, a particle diameter distribution of a combination of the positive active material and the first solid electrolyte is a bimodal distribution. The particle distribution of the positive active material and the first solid electrolyte may have, for example, a trimodal or multimodal distribution. The particle size and particle size distribution may be provided by ball milling, jet milling, grinding, sieving, or a combination thereof.

In one embodiment, an amount of the positive active material in the positive electrode, e.g., a loading of the positive active material in the positive electrode may be in a range of 70 wt% to about 90 wt%, 70 wt% to about 88 wt%, 70 wt% to about 85 wt%, or about 80 wt% to about 85 wt%, based on a total weight of the positive electrode. In one embodiment, an amount of the positive active material in the positive electrode, e.g., a loading of the positive active material in the positive electrode may be in a range of 70 wt% to about 75 wt%, based on a total weight of the positive electrode. While not wanting to be bound by theory, it is understood that use of the combination of particle sizes of the positive active material and the first solid electrolyte permits use of the amount of the positive active material in the positive electrode.

In one embodiment, a porosity of the positive active material may be less than 25 % or, for example, in a range of about 0.01 % to 25 %, about 0.1 % to about 20 %, about 0.5 % to about 15 %, or about 1 % to about 10 %, based on a total volume of the positive electrode. While not wanting to be bound by theory, it is understood that use of the combination of particle sizes of the positive active material and the first solid electrolyte permits use of the porosity, and improved performance such as specific capacity, energy density, or power density may be provided. When the combination of particle sizes of the positive active material and the first solid electrolyte is used, packing density may improve, and thus specific energy and energy density may improve.

Porosity of the positive electrode active material can be measured by mercury porosimetry, analysis such as TEM, SEM, or cross-sectional analysis of particles using a focused ion beam (FIB).

Also, an amount of the positive active material may be in a range of about 30 vol% to about 80 vol% or, for example, about 35 vol% to about 75 vol% or about 40 vol% to about 70 vol%, based on a total volume of the positive electrode.

Also, in the positive electrode, an amount of the first solid electrolyte may be in a range of about 10 wt% to about 40 wt% or, for example, about 15 wt% to about 35 wt% or about 20 wt% to about 25 wt%, based on a total weight of the positive electrode. When the amount of the first solid electrolyte is within these ranges, a greater amount of the positive active material may be used, and thus specific capacity and energy density may increase.

A utilization of the positive electrode according to an embodiment may be 80 % or higher or, for example, about 82 % or higher, or in a range of about 82 % to about 99 % or, for example, about 82 % to about 95 %. Definition of the utilization of the positive electrode is the same as that commonly known in the art. A utilization of the positive electrode denotes a proportion that contributes to capacity in the whole positive electrode or, for example, may refer to a percentage of an amount of the positive active material with respect to a total amount of the positive electrode. Here, the term "amount" may denote a weight.

Alternatively, a utilization of the positive electrode may be defined by Equation 2 below.

Equation 2

Positive electrode utilization (%) = {(actual capacity of positive electrode/theoretical capacity of positive active material)} X 100

In the positive electrode for a solid-state secondary battery, the positive active material may be a transition metal oxide including nickel, cobalt, and manganese, and when the positive electrode is discharged at a temperature of 25 °C and a current density of 0.05 mA/cm$^2$, a capacity of the positive active material may be in a range of about 110 mAh/g to about 220 mAh/g or, for example, about 110 mAh/g to about 150 mAh/g.

The positive electrode may further include at least one selected from a conducting agent and a binder. Examples of the conducting agent may include

graphite, carbon black, acetylene black, ketjen black, carbon nanotubes (CNTs), carbon fibers, a metal material such as Ni, or a combination thereof.

Examples of the binder may include styrene butadiene rubber (SBR), polytetrafluoroethylene, polyvinylidene fluoride, polyethylene, or a combination thereof.

The positive electrode may further include additives such as a filler, a coating agent, a dispersant, and an ion conducting agent in addition to the positive active material, solid electrolyte, binder, and conducting agent.

The filler, the coating agent, the dispersant, and the ion conducting agent that may be added to the positive electrode may be materials that are generally used in an electrode of a solid-state secondary battery.

The improved electrode may provide improved performance of solid-state secondary battery.

In one embodiment, the positive electrode may have improved specific energy.

According to another embodiment, the positive active material is a transition metal oxide containing nickel and cobalt. When a cell including the positive electrode is discharged at a C/20 rate at 25 °C, the positive active material provides a capacity in a range of about 110 mAh/g to about 175 mAh/g or, for example, about 120 mAh/g to about 165 mAh/g, or about 130 mAh/g to about 155 mAh/g, based on a total weight of the positive active material.

In some embodiments, a cell including the positive electrode may be charged to 4.2 volts (V) verses Li/Li$^+$ at 25 °C at a C/20 rate, and then discharged at a C/20 rate at 25 °C to 3 V versus Li/Li$^+$ to determine the capacity.

Also, provided is a positive electrode assembly for a solid-state secondary battery, the assembly including: the positive electrode; and a second solid electrolyte on the positive electrode, wherein the first solid electrolyte and the second solid electrolyte are identical to or different from each other.

For example, the second solid electrolyte is a sulfide solid electrolyte, an oxide solid electrolyte, or a combination thereof.

In one embodiment, the first solid electrolyte and the second solid electrolyte are the same solid electrolyte. In some embodiments, the first solid electrolyte and the second solid electrolyte are different electrolytes.

In some embodiments, the first solid electrolyte may be $Li_2S$-$P_2S_5$, and the second solid electrolyte may be a garnet-type material, e.g., $Li_7La_3Zr_2O_{12}$.

Also, provided is a solid-state secondary battery. As shown in FIG. 1, a solid-state secondary battery 200 includes a positive electrode 210, a negative electrode 240, and a second solid electrolyte 220 between the positive electrode 210 and the negative electrode 240, wherein the first solid electrolyte and the second solid electrolyte are identical to or different from each other. For example, a separator 230 may be optionally included in the solid-state secondary battery 200. The solid-state secondary battery 200 contains a case 250 and a header 260.

The negative electrode may include a negative active material.

Examples of the negative active material may include a lithium metal, a lithium alloy, and any material that may reversibly absorb and desorb lithium or intercalate and deintercalated lithium. Examples of the negative active material may include a lithium metal, a lithium alloy, or a lithium compound such as a lithium titanium oxide, and a carbonaceous negative active material.

The negative active material may be disposed on a current collector such as a copper current collector.

The carbonaceous negative active material is particularly amorphous carbon. Examples of the amorphous carbon may include carbon black (CB), acetylene black (AB), furnace black (FB), ketjen black (KB), or graphene, but embodiments are not limited thereto, and any amorphous carbon available in the art may be used. The amorphous carbon refers to carbon that has no crystallinity or a very low crystallinity, and it is different from crystalline carbon or graphite-based carbon.

In some embodiments, the negative active material may be any metal or semi-metal active material in the art that forms an alloy or a compound with lithium. For example, the negative active material may include at least one selected from the group consisting of gold (Au), platinum (Pt), palladium (Pd), silicon (Si), silver (Ag), aluminum (Al), bismuth (Bi), tin (Sn), and zinc (Zn).

The negative electrode may include a negative active material layer.

The negative active material layer may include a one-type negative active material or a plurality of different types of negative active materials.

For example, the negative active material layer may include amorphous carbon alone or a mixture including amorphous carbon and at least one selected from the group consisting of gold (Au), platinum (Pt), palladium (Pd), silicon (Si), silver (Ag), aluminum (Al), bismuth (Bi), tin (Sn), and zinc (Zn). In the mixture, a mixing ratio of the mixture of amorphous carbon to gold may be a weight ratio in a range of about to 10:1 to about 1:2, about 5:1 to about 1:1, or about 4:1 to about 2:1.

When the mixture is used as a negative active material, cycle characteristics of the solid-state secondary battery may further improve.

For example, the negative active material layer may include a binder. Examples of the binder may include styrene-butadiene rubber (SBR), polytetrafluoroethylene (PTFE), polyvinylidene fluoride (PVDF), polyethylene, a vinylidene fluoride/hexafluoropropylene copolymer, polyacrylonitrile, polymethylmethacrylate, but embodiments are not limited thereto, and any binder available in the art may be used.

The negative active material layer is disposed on a current collector such as a copper current collector.

For example, the solid-state secondary battery may further include a thin film on a negative current collector, the thin film including an element that may form an alloy with lithium. The thin film is disposed between the negative current collector and the negative active material layer. For example, the thin film may include an element that may form an alloy with lithium. Examples of the element that may form an alloy with lithium may include gold, silver, zinc, tin, indium, silicon, aluminum, and bismuth. The thin film is formed of one of these metals or may be formed of alloys of different metals. For example, when the thin film is disposed on the negative current collector, a shape of precipitation of a negative active material layer (not shown) that is precipitated between the thin film and the negative active material layer is further flattened, and cycle characteristics of the solid-state secondary battery may be further improved.

A thickness of the thin film may be in a range of about 1 nm to about 800 nm or, for example, about 50 nm to about 600 nm, or about 100 nm to about 500 nm. When a thickness of the thin film is in these ranges, an amount of lithium precipitation in the negative electrode may increase as the thin film intercalates lithium, which may result in an increase of energy density of the solid-state secondary battery, and thus cycle characteristics of the solid-state secondary battery may improve. The thin film may be disposed on the negative current collector by using, for example, vacuum vapor deposition, sputtering, or plating, but embodiments are not limited thereto.

The solid-state secondary battery according to an embodiment may further include, for example, a second negative active material layer disposed between the negative current collector and the second solid electrolyte by charging. In some embodiments, the solid-state secondary battery may further include, for example, a second negative active material layer disposed between the negative current collector and a first negative active material layer by charging. In some embodiments, the solid-state secondary battery may further include, for example, a second negative active material layer disposed between a solid electrolyte layer and a first negative active material layer by charging.

The second negative active material layer is a metal layer that includes lithium or a lithium alloy. The metal layer may include lithium or a lithium alloy. Therefore, since the second negative active material layer is the metal layer including lithium, the second negative active material layer serves as, for example, a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, and a Li-Si alloy, but embodiments are not limited thereto, and any lithium alloy available in the art may be used. The second negative active material layer may includes one of the alloys or lithium, or may be formed of various alloys.

For example, the second negative active material layer may be disposed between the negative current collector and the first negative active material layer before assembling the solid-state secondary battery or may be precipitated between the negative current collector and the first negative active material layer by charging after assembling the solid-state secondary battery.

When the second negative active material layer is disposed between the negative current collector and the first negative active material layer before assembling the solid-state secondary battery, the second negative active material layer is a metal layer including lithium, and thus the second negative active material layer may serve as a lithium reservoir. Cycle characteristics of the solid-state secondary battery including the second negative active material layer may further improve. A lithium foil may be disposed between the negative current collector and the first negative active material layer before assembling the solid-state secondary battery.

When the second negative active material layer is disposed by charging after assembling the solid-state secondary battery, the solid-state secondary battery does not include the second negative active material layer at the time the solid-state secondary battery is being assembled, and thus energy density of the solid-state secondary battery increases.

In some embodiments, the negative electrode may be a lithium-free region that does not include lithium metal or a lithium alloy at an initial state of the battery or after discharging the battery.

According to another embodiment, provided is a method of preparing the positive electrode.

The method includes providing a positive active material; providing a first solid electrolyte; and contacting the positive active material and the first solid electrolyte at a pressure in a range of 50 MPa to 600 MPa to provide the positive electrode. The contacting of the positive active material and the first solid electrolyte may provide the positive electrode by using, for example, a press or hammer mill.

In the contacting of the positive active material and the first solid electrolyte at a pressure in a range of 50 MPa to 600 MPa, the positive electrode may be prepared in the desired shape when the pressure is within this range.

The positive active material and the first solid electrolyte may be contacted with each other by using a mechanical milling method.

The providing of the positive electrode may include, for example, adding a binder to a mixture of the positive active material and the first solid electrolyte. A conducting agent may be added to the mixture.

In one embodiment, the solid-state secondary battery may be provided by further including disposing a second solid electrolyte layer between the positive electrode and the negative electrode. A separator may be prepared between the positive electrode and the negative electrode. For example, the separator may be a microporous material optionally including a second solid electrolyte.

One or more embodiments will now be described in more detail with reference to the following examples. However, these examples are not intended to limit the scope of the one or more embodiments.

Examples

Example 1: Particle size ratio

The particle size ratio was evaluated by determining the positive electrode utilization using a positive active material $LiNi_{0.5}CO_{0.2}Mn_{0.3}O_2$ (NCM523) having a particle size of $5\mu m$ or a positive active material NCM523 having a particle size of 12 $\mu m$ and $Li_2S-P_2S_5$ (LPS, where a molar ratio of $Li_2S$ to $P_2S_5$ is 7:3) as the first solid electrolyte having particle sizes in a range of about 1.25 $\mu m$ to about 8 $\mu m$. A ratio $\lambda$ of the positive active material particle size to the first solid electrolyte particle size was in a range of about 0.625 to about 8.

The positive electrode utilization is defined the same as in Equation 2.

Equation2

Positive electrode utilization (%) = {(actual capacity of positive electrode/theoretical capacity of positive active material)} X 100 FIG. 2 is a graph of positive electrode loading (a weight percent, wt%, of the positive active material based on a total weight of the positive electrode) versus the ratio $\lambda$ of the positive active material particle size to the first solid electrolyte particle size. In FIG. 2, colors show positive electrode utilizations, where a positive electrode utilization is in a range of about 1 (green) to about 0.1 (red). In FIG. 2, utilization of 1 to 0.1 represents positive electrode utilization of 100% to 10%, respectively.

As shown in FIG. 2, the positive electrode utilization correlates to the ratio $\lambda$. When $\lambda$ was less than 1, a positive electrode utilization greater than 50 % was difficult to achieve. When $\lambda$ was 3 or greater, a positive electrode utilization of 82 % or more was provided using a positive electrode loading of 70 wt% or less.

Example 2: Effect of first solid electrolyte particle size

Using NCM523 having a particle size of 5 $\mu m$, the effect of changing the ratio $\lambda$ of the positive active material particle size to the first solid electrolyte particle size was confirmed. FIG. 3 is a graph of positive electrode loading (wt% of the positive active material based on a total weight of the positive electrode) versus the ratio $\lambda$ of the positive active material particle size to the first solid electrolyte particle size using a LPS first solid electrolyte having particle sizes in a range of about 1.25 $\mu m$ to about 8 $\mu m$. As shown in FIG. 3, when the ratio $\lambda$ of the positive active material particle size to the first solid electrolyte particle size is greater than 3, a positive electrode utilization of about 82 % or more was provided at a positive electrode loading of 60 wt%. FIG. 4 shows discharge curves of the positive electrode using LPS having a particle size of 1.5 $\mu m$, 3 $\mu m$, 5 $\mu m$, or 8 $\mu m$ and 5 $\mu m$ NCM523 having a particle size of 5 $\mu m$ at a current of 0.05 mA/cm$^2$, illustrating that the positive electrode utilization improves when the ratio $\lambda$ is greater than 3. The discharge curves shown in FIG. 4 correspond to the points indicated at 60 wt% of the positive electrode loading, and 8 $\mu m$, 5 $\mu m$, 3 $\mu m$, or 1.5 $\mu m$ in FIG. 3. The discharge curves shown in FIG. 4 was obtained using a battery including lithium metal as the negative electrode and LPS as a solid electrolyte.

Example 3: Effect of positive electrode loading

The ratio $\lambda$ was further evaluated using various positive electrode loadings using NCM523 LPS having a particle size of 5 $\mu m$ and LPS having a particle size of 1.5 $\mu m$ as the first solid electrolyte. The ratio $\lambda$ was 3.3. As shown in FIG. 5, when the ratio $\lambda$ was 3.3, a positive electrode loading of up to 70 wt% was used, and a utilization was about 82 % or more. Discharge curves for batteries using NCM523 having a particle size of 5 $\mu m$ and $Li_7P_3S_{11}$ having a particle size of 1.5 $\mu m$ as the first solid electrolyte at loadings of 60 %, 70 % and 80 % of various NCM523 are shown in FIG. 6. As shown in FIG. 6, at 70 wt% of NCM523 and $\lambda$=3.3, a capacity was about 150 mAh/g or higher. A current of 0.05 mA/cm$^2$ at 25 °C was used. The discharge curves shown in FIG. 6 was obtained using a battery including lithium metal as the negative electrode and LPS as a solid electrolyte.

Example 4: First solid electrolyte content and porosity

The effect of the ratio $\lambda$ is shown in FIG. 7, illustrating the positive electrode utilization when using various combinations of NCM523 and LPS particle size, and the ratio is in a range of about 1 to about 8. As shown in FIG. 7, when a positive electrode loading is 80 wt%, e.g., 50 vol%, a utilization was 80 % or more. Here, the ratio $\lambda$ is 4. As shown in FIG. 8, when the combination of the positive active material and the first solid electrolyte particle size is used, an amount of the positive active material increases, and an amount of the solid electrolyte decreases, and thus the positive active material loading increases, which improves the effect at a low porosity, e.g., a porosity of 20 %, 10 %, or 0 %. In FIG. 8, "0.12" shows a porosity of 12%, and "0.1" shows a porosity of 10%. In Fig. 8, the sum of the solid electrolyte content and the positive electrode loading is 95%, and the remaining 5% is the content of CNF(carbon nanofiber).

As described above, according to one or more embodiments, a positive electrode having improved performance such as energy density for a solid-state secondary battery and a solid-state secondary battery including the positive electrode may be prepared by using a positive active material having a large particle size and a solid electrolyte having a small particle size in combination.

Various embodiments are shown in the accompanying drawings.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A positive electrode for a solid-state secondary battery, the positive electrode comprising:

   a positive active material; and
   a first solid electrolyte,
   wherein a ratio $\lambda$ of an average particle diameter of the positive active material to an average particle diameter of the first solid electrolyte satisfies Equation 1,
   wherein an average particle diameter of the positive active material is in a range of 5 $\mu$m to 12 $\mu$m, and an average particle diameter of the first solid electrolyte is in a range of 1.5 $\mu$m to 4 $\mu$m, wherein an amount of the positive active material is in a range of 70 wt% to 95 wt% based on a total weight of the positive electrode:

$$\text{Equation 1}$$

$$3 \leq \lambda \leq 40.$$

2. The positive electrode of claim 1, wherein a porosity of the positive electrode is 25 % or lower based on a total volume of the positive electrode.

3. The positive electrode of claim 2, wherein a particle diameter distribution of the positive active material and the first solid electrolyte has a bimodal distribution.

4. The positive electrode of any of claims 1-3, wherein the ratio $\lambda$ of an average particle diameter of the positive active material to an average particle diameter of the first solid electrolyte is in a range of 3.3 to 8.

5. The positive electrode of any of claims 1-4, wherein an amount of the positive active material is in a range of 80 wt% to 95 wt% based on a total weight of the positive electrode.

6. The positive electrode of any of claims 1-5, wherein the positive active material is a nickel-based active material represented by Formula 2:

   Formula 2 $\qquad Li_a(Ni_{1-x-y-z}Co_xMn_yM_z)O_2$

   wherein, in Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al); and
$0.95 \leq a \leq 1.3$, $0<x<1$, $0 \leq y<1$, and $0 \leq z<1$.

7. The positive electrode of any of claims 1-6, wherein the first solid electrolyte is a sulfide solid electrolyte, an oxide solid electrolyte, or a combination thereof.

8. The positive electrode of claim 7, wherein the sulfide solid electrolyte is $Li_2S-P_2S_5$, $Li_2S-P_2S_5-LiX$ (where X is a halogen), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are positive numbers, and Z is Ge, Zn, or Ga), $Li_2S-GeS_2$, $Li_2S-SiS_2-Li_3PO_4$, $Li_2S-SiS_2-Li_pM^1O_q$ (where p and q are positive numbers, and $M^1$ is P, Si, Ge, B, Al, Ga, or In), $Li_{7-x}PS_{6-x}Cl_x$ (where $0<x<2$), $Li_{7-x}PS_{6-x}Br_x$ (where $0<x<2$), $Li_{7-x}PS_{6-x}I_x$ (where $0<x<2$), or a combination thereof; and/or

wherein the first solid electrolyte is $Li_{1+x+y}Al_xTi_{2-x}Si_yP_{3-y}O_{12}$ (where $0<x<2$ and $0 \leq y<3$), $BaTiO_3$, $Pb(Zr_{(1-x)}Ti_x)O_3$ (where $0 \leq x<1$), $Pb_{1-x}La_xZr_{1-y}Ti_yO_3$ (where $0 \leq x<1$ and $0 \leq y<1$), $Pb(Mg_{1/3}Nb_{2/3})O_3-PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $SiC$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al_{(1-m)}Ga_m)_x(Ti_{(1-n)}Ge_n)_{2-x}Si_yP_{3-y}O_{12}$ (where $0 \leq x \leq 1$, $0 \leq y \leq 1$, $0 \leq m \leq 1$, and $0 \leq n \leq 1$ ), $Li_xLa_yTiO_3$ (where $0<x<2$ and $0<y<3$), $Li_xGe_yP_zS_w$ (where $0<x<4$, $0<y<1$, $0<z<1$, and $0<w<5$), $Li_xN_y$ (where $0<x<4$ and $0<y<2$), $SiS_2$, $Li_xSi_yS_z$ (where $0<x<3$, $0<y<2$, and $0<z<4$), $Li_xP_yS_z$ (where $0<x<3$, $0<y<3$, and $0<z<7$), $Li_2O$, $LiF$, $LiOH$, $Li_2CO_3$, $LiAlO_2$, a $Li_2O-Al_2O_3-SiO_2-P_2O_5-TiO_2-GeO_2$ ceramic, a garnet ceramic of $Li_{3+x}La_3M^1{}_2O_{12}$ (where $M^1$ is Te, Nb, or Zr, and x is an integer of 1 to 10), a compound of Formula 5, or a combination thereof:

Formula 5 $(Li_{1-x}M1_x)_{7-y}PS_{6-y}M2_y$

wherein, in Formula 5, $0<x \leq 0.07$ and $0 \leq y \leq 2$; M1 is Na, K, or a combination thereof; and
M2 is F, Cl, Br, I, or a combination thereof.

9. The positive electrode of any of claims 1-8, wherein the solid electrolyte is a compound represented by Formula 6, a compound represented by Formula 7, or a combination thereof:

Formula 6 $Li_{5+x}E_3(Me^1{}_zMe^2{}_{(2z)})O_d$

wherein, in Formula 6, E is a trivalent cation;

$Me^1$ and $Me^2$ are each independently one selected from a trivalent cation, a tetravalent cation, a pentavalent cation, and a hexavalent cation;
$0<x \leq 3$, $0 \leq z<2$, and $0<d \leq 12$; and
O is optionally partially or totally substituted with a pentavalent anion, a hexavalent anion, a heptavalent anion, or a combination thereof:

Formula 7 $Li_{5+x+2y}(D_yE_{3-y})(Me^1{}_zMe^2{}_{2-z})O_d$

wherein, in Formula 7, D is a monovalent cation or a divalent cation;
E is a trivalent cation;
$Me^1$ and $Me^2$ are each independently a trivalent cation, a tetravalent cation, a pentavalent cation, or a hexavalent cation;
$0<x+2y \leq 3$, $0 \leq y \leq 0.5$, $0 \leq z<2$, and $0<d \leq 12$; and
O is optionally partially or totally substituted with a pentavalent anion.

10. The positive electrode of any of claims 1-9, wherein a utilization of the positive electrode is 80 % or higher.

11. A positive electrode assembly comprising:

the positive electrode of any of claims 1-10; and
a second solid electrolyte disposed on the positive electrode,
wherein the first solid electrolyte and the second solid electrolyte are identical to or different from each other;
preferably wherein the first solid electrolyte and the second solid electrolyte are each independently a sulfide solid electrolyte, an oxide solid electrolyte, or a combination thereof.

12. A solid-state secondary battery comprising the positive electrode of any of claims 1-10; a negative electrode; and a second solid electrolyte disposed between the positive electrode and the negative electrode, wherein the first solid electrolyte and the second solid electrolyte are identical to or different from each other; preferably wherein the first solid electrolyte and the second solid electrolyte are each independently a sulfide solid electrolyte, an oxide solid electrolyte, or a combination thereof.

13. A method of preparing a positive electrode for a solid-state secondary battery, the method comprising:

providing a positive active material;
providing a first solid electrolyte; and
contacting the positive active material and the first solid electrolyte at a pressure in a range of 50 megaPascals (MPa) to 600 MPa to provide the positive electrode of any of claims 1-10 for a solid-state secondary battery.

**Patentansprüche**

1. Positive Elektrode für eine Festkörper-Sekundärbatterie, wobei die positive Elektrode umfasst:

ein positives aktives Material; und
einen ersten Festelektrolyten,
wobei ein Verhältnis $\lambda$ eines durchschnittlichen Partikeldurchmessers des positiven aktiven Materials zu einem durchschnittlichen Partikeldurchmesser des ersten Festelektrolyten die Gleichung 1 erfüllt,
wobei ein durchschnittlicher Partikeldurchmesser des positiven aktiven Materials in einem Bereich von 5 $\mu$m bis 12 $\mu$m liegt und ein durchschnittlicher Partikeldurchmesser des ersten Festelektrolyten in einem Bereich von 1,5 $\mu$m bis 4 $\mu$m liegt, wobei eine Menge des positiven aktiven Materials in einem Bereich von 70 Gew.-% bis 95 Gew.-%, bezogen auf das Gesamtgewicht der positiven Elektrode, liegt:

<div align="center">

Gleichung 1

$3 \leq \lambda \leq 40.$

</div>

2. Positive Elektrode nach Anspruch 1, wobei eine Porosität der positiven Elektrode 25 % oder weniger, bezogen auf einem Gesamtvolumen der positiven Elektrode, beträgt.

3. Positive Elektrode nach Anspruch 2,
wobei eine Partikeldurchmesserverteilung des positiven aktiven Materials und des ersten Festelektrolyten eine bimodale Verteilung aufweist.

4. Positive Elektrode nach einem der Ansprüche 1 bis 3, wobei ein Verhältnis $\lambda$ eines durchschnittlichen Partikeldurchmessers des positiven aktiven Materials zu einem durchschnittlichen Partikeldurchmesser des ersten Festelektrolyten in einem Bereich von 3,3 bis 8 liegt.

5. Positive Elektrode nach einem der Ansprüche 1 bis 4, wobei eine Menge des positiven aktiven Materials in einem Bereich von 80 Gew.-% bis 95 Gew.-%, bezogen auf das Gesamtgewicht der positiven Elektrode, liegt.

6. Positive Elektrode nach einem der Ansprüche 1 bis 5, wobei das positive aktive Material ein aktives Material auf Nickelbasis ist, das durch Formel 2 dargestellt wird:

Formel 2 $\qquad$ $Li_a(Ni_{1-x-y-z}Co_xMn_yM_z)O_2$

wobei in Formel 2 M ein Element ist, das aus der Gruppe bestehend aus Bor (B), Magnesium (Mg), Calcium (Ca), Strontium (Sr), Barium (Ba), Titan (Ti), Vanadium (V), Chrom (Cr), Eisen (Fe), Kupfer (Cu), Zirkonium (Zr) und Aluminium (Al) ausgewählt ist; und
$0,95 \leq a \leq 1,3$, $0 < x < 1$, $0 \leq y < 1$, und $0 \leq z < 1$.

7. Positive Elektrode nach einem der Ansprüche 1 bis 6, wobei der erste Festelektrolyt ein Sulfidfestelektrolyt, ein Oxidfestelektrolyt oder eine Kombination davon ist.

8. Positive Elektrode nach Anspruch 7, wobei der Sulfidfestelektrolyt $Li_2S-P_2S_5$, $Li_2S-P_2S_5-LiX$ (wobei X ein Halogen ist), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (wobei m und n positive Zahlen sind, und Z Ge, Zn, oder Ga ist), $Li_2S-GeS_2$, $Li_2S-SiS_2-Li_3PO_4$, $Li_2S-SiS_2-Li_pM^1O_q$ (wobei p und q positive Zahlen sind und $M^1$ P, Si, Ge, B, Al, Ga oder In ist), $Li_{7-x}PS_{6-x}Cl_x$ (wobei 0<x<2), $Li_{7-x}PS_{6-x}Br_x$ (wobei 0<x<2), $Li_{7-x}PS_{6-x}I_x$ (wobei 0<x<2) oder eine Kombination davon ist; und/oder

wobei der erste Festelektrolyt $Li_{1+x+y}Al_xTi_{2-x}Si_yP_{3-y}O_{12}$ (wobei 0<x<2 und 0≤y<3), $BaTiO_3$, $Pb(Zr_{(1-x)}Ti_x)O_3$ (wobei 0≤x≤1), $Pb_{1-x}La_xZr_{1-y}Ti_yO_3$ (wobei 0≤x<1 und 0≤y<1), $Pb(Mg_{1/3}Nb_{2/3})O_3-PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $SiC$, $Li_3PO_4$, $Li_xTi_y(PO_4)_3$ (wobei 0<x<2 and 0<y<3), $Li_xAl_yTi_z(PO_4)_3$ (wobei 0<x<2, 0≤y<1 und 0<z<3), $Li_{1+x+y}(Al_{(1-m)}Ga_m)x(Ti_{(1-n)}Ge_n)_{2-x}Si_yP_{3-y}O_{12}$ (wobei 0≤x≤1, 0≤y≤1, 0≤m≤1, und 0≤n≤1), $Li_xLa_yTiO_3$ (wobei 0<x<2 und 0<y<3), $Li_xGe_yP_zS_w$ (wobei 0<x<4, 0<y<1, 0<z<1, und 0<w<5), $Li_xN_y$ (wobei 0<x<4 und 0<y<2), $SiS_2$, $Li_xSi_yS_z$ (wobei 0<x<3, 0<y<2, und 0<z<4), $Li_xP_yS_z$ (wobei 0<x<3, 0<y<3, und 0<z<7), $Li_2O$, $LiF$, $LiOH$, $Li_2CO_3$, $LiAlO_2$, eine $Li_2O-Al_2O_3-SiO_2-P_2O_5-TiO_2-GeO_2$-Keramik, eine Granatkeramik aus $Li_{3+x}La_3M^1{}_2O_{12}$ (wobei $M^1$ Te, Nb, oder Zr ist und x eine Ganzzahl von 1 bis 10 ist), eine Verbindung der Formel 5 oder eine Kombination davon ist:

$$\text{Formel 5} \qquad (Li_{1-x}M1_x)_{7-y}PS_{6-y}M2_y$$

wobei in der Formel 5 O<x<0,07 und 0≤y≤2; M1 Na, K, oder ein Kombination davon ist; und
M2 F, Cl, Br, I oder eine Kombination davon ist.

9. Positive Elektrode nach einem der Ansprüche 1 bis 8, wobei der Festelektrolyt eine durch die Formel 6 dargestellte Verbindung, eine durch die Formel 7 dargestellte Verbindung oder eine Kombination davon ist:

$$\text{Formel 6} \qquad Li_{5+x}E_3(Me^1{}_zMe^2{}_{(2-z)})O_d$$

wobei in Formel 6 E ein dreiwertiges Kation ist;
$Me^1$ und $Me^2$ jeweils unabhängig voneinander eines aus einem dreiwertigen Kation, einem vierwertigen Kation, einem fünfwertigen Kation und einem sechswertigen Kation ausgewählt sind;
0<x≤3, 0≤z<2 und 0<d≤12; und
O optional teilweise oder vollständig mit einem fünfwertigen Anion, einem sechswertigen Anion, einem siebenwertigen Anion oder einer Kombination davon substituiert ist:

$$\text{Formel 7} \qquad Li_{5+x+2y}(D_yE_{3^-y})(Me^1{}_zMe^2{}_{2-z})O_d$$

wobei in Formel 7 D ein einwertiges Kation oder ein zweiwertiges Kation ist;
E ein dreiwertiges Kation ist;
$Me^1$ und $Me^2$ jeweils unabhängig voneinander ein dreiwertiges Kation, ein vierwertiges Kation, ein fünfwertiges Kation oder ein sechswertiges Kation sind;
0<x+2y≤3, 0≤y≤0,5, 0≤z<2, und 0<d≤12; und
O optional teilweise oder vollständig mit einem fünfwertigen Anion substituiert ist.

10. Positive Elektrode nach einem der Ansprüche 1 bis 9, wobei eine Nutzung der positiven Elektrode 80 % oder mehr beträgt.

11. Positive Elektrodenbaugruppe, umfassend:

die positive Elektrode nach einem der Ansprüche 1 bis 10; und
einen zweiten Festelektrolyten, der auf der positiven Elektrode angeordnet ist,
wobei der erste Festelektrolyt und der zweite Festelektrolyt miteinander identisch oder voneinander verschieden sind;
vorzugsweise wobei der erste Festelektrolyt und der zweite Festelektrolyt jeweils unabhängig voneinander ein Sulfidfestelektrolyt, ein Oxidfestelektrolyt oder eine Kombination davon sind.

12. Festkörper-Sekundärbatterie, umfassend die positive Elektrode nach einem der Ansprüche 1 bis 10; eine negative Elektrode; und einen zweiten Festelektrolyten, der zwischen der positiven Elektrode und der negativen Elektrode angeordnet ist, wobei der erste Festelektrolyt und der zweite Festelektrolyt miteinander identisch oder voneinander verschieden sind;

vorzugsweise wobei der erste Festelektrolyt und der zweite Festelektrolyt jeweils unabhängig voneinander ein Sulfidfestelektrolyt, ein Oxidfestelektrolyt oder eine Kombination davon sind.

13. Verfahren zum Herstellen einer positiven Elektrode für eine Festkörper-Sekundärbatterie, wobei das Verfahren umfasst:

Bereitstellen eines positiven aktiven Materials;
Bereitstellen eines ersten Festelektrolyten; und
Kontaktieren des positiven aktiven Materials und des ersten Festelektrolyten bei einem Druck in einem Bereich von 50 Megapascal (MPa) bis 600 MPa, um die positive Elektrode nach einem der Ansprüche 1 bis 10 für eine Festkörper-Sekundärbatterie bereitzustellen.


**Revendications**

1. Electrode positive pour une batterie secondaire à semi-conducteurs, l'électrode positive comprenant :

une matière active positive ; et
un premier électrolyte solide,
dans laquelle un rapport $\lambda$ d'un diamètre de particule moyen de la matière active positive à un diamètre de particule moyen du premier électrolyte solide satisfait l'équation 1,
dans laquelle un diamètre de particule moyen de la matière active positive est dans une plage de 5 $\mu$m à 12 $\mu$m, et un diamètre de particule moyen du premier électrolyte solide est dans une plage de 1,5 $\mu$m à 4 $\mu$m,
dans laquelle une quantité de la matière active positive est dans une plage de 70 % en poids à 95 % en poids sur la base d'un poids total de l'électrode positive :

## équation 1 :

$$3 \leq \lambda \leq 40.$$

2. Electrode positive selon la revendication 1, dans laquelle une porosité de l'électrode positive est de 25 % ou moins sur la base du volume total de l'électrode positive.

3. Electrode positive selon la revendication 2, dans laquelle une distribution de diamètre de particule de la matière active positive et du premier électrolyte solide a une distribution bimodale.

4. Electrode positive selon l'une quelconque des revendications 1 à 3, dans laquelle le rapport $\lambda$ d'un diamètre de particule moyen de la matière active positive à un diamètre de particule moyen du premier électrolyte solide est dans une plage de 3,3 à 8.

5. Electrode positive selon l'une quelconque des revendications 1 à 4, dans laquelle une quantité de la matière active positive est dans une plage de 80 % en poids à 95 % en poids sur la base d'un poids total de l'électrode positive.

6. Electrode positive selon l'une quelconque des revendications 1 à 5, dans laquelle la matière active positive est une matière active à base de nickel représentée par la formule 2 :

formule 2 $\qquad Li_a(Ni_{1-x-y-z}Co_xMn_yM_z)O_2$

dans laquelle, dans la formule 2, M est un élément choisi dans le groupe constitué du bore (B), magnésium (Mg), calcium (Ca), strontium (Sr), baryum (Ba), titane (Ti), vanadium (V), chrome (Cr), fer (Fe), cuivre (Cu), zirconium (Zr) et aluminium (Al) ; et
$0,95 \leq a \leq 1,3$ ; $0 < x < 1$ ; $0 \leq y < 1$ et $0 \leq z < 1$.

7. Electrode positive selon l'une quelconque des revendications 1 à 6, dans laquelle le premier électrolyte solide est un électrolyte solide de sulfure, un électrolyte solide d'oxyde ou une combinaison de ceux-ci.

8. Electrode positive selon la revendication 7, dans laquelle l'électrolyte solide de sulfure est $Li_2S-P_2S_5$, $Li_2S-P_2S_5-LiX$ (où X est un halogène), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (où m et n sont des nombres positifs, et Z est Ge, Zn ou Ga), $Li_2S-GeS_2$, $Li_2S-SiS_2-Li_3PO_4$, $Li_2S-SiS_2-Li_pM^1O_q$ (où p et q sont des nombres positifs et $M^1$ est P, Si, Ge, B, Al, Ga, ou In), $Li_{7-x}PS_{6-x}Cl_x$ (où 0<x<2), $Li_{7-x}PS_{6-x}Br_x$ (où 0<x<2), $Li_{7-x}PS_{6-x}I_x$ (où 0<x<2), ou une combinaison de ceux-ci ; et/ou

   dans lequel le premier électrolyte solide est $Li_{1+x+y}Al_xTi_{2-x}Si_yP_{3-y}O_{12}$ (où 0<x<2 et 0≤y<3), $BaTiO_3$, $Pb(Zr_{(1-x)}Ti_x)O_3$ (où 0≤x≤1), $Pb_{1-x}La_xZr_{1-y}Ti_yO_3$ (où 0≤x<1 et 0≤y<1), $Pb(Mg_{1/3}Nb_{2/3})O_3-PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, SiC, $Li_3PO_4$, $Li_xTi_y(PO_4)_3$ (où 0<x<2 et 0<y<3), $Li_xAl_yTi_z(PO_4)_3$ (où 0<x<2, 0≤y<1 et 0<z<3), $Li_{1+x+y}(Al_{(1-m)}Ga_m)_x(Ti_{(1-n)}Ge_n)_{2-x}Si_yP_{3-y}O_{12}$ (où 0≤x≤1, 0≤y≤1, 0≤m≤1 et 0≤n≤1), $Li_xLa_yTiO_3$ (où 0<x<2 et 0<y<3), $Li_xGe_yP_zS_w$ (où 0<x<4, 0<y<1, 0<z<1, et 0<w<5), $Li_xN_y$ (où 0<x<4 et 0<y<2), $SiS_2$, $Li_xSi_yS_z$ (où 0<x<3, 0<y<2, et 0<z<4), $Li_xP_yS_z$ (où 0<x<3, 0<y<3, et 0<z<7), $Li_2O$, LiF, LiOH, $Li_2CO_3$, $LiAlO_2$, une céramique $Li_2O-Al_2O_3-SiO_2-P_2O_5-TiO_2-GeO_2$, une céramique grenat de $Li_{3+x}La_3M^1_2O_{12}$ (où $M^1$ est Te, Nb ou Zr, et x est un nombre entier de 1 à 10), un composé de la formule 5, ou une combinaison de ceux-ci :

   formule 5          $(Li_{1-x}M1_x)_{7-y}PS_{6-y}M2_y$

   dans laquelle, dans la formule 5, 0<x≤0,07 et 0≤y≤2 ; M1 est Na, K ou une combinaison de ceux-ci ; et M2 est F, Cl, Br, I, ou une combinaison de ceux-ci.

9. Electrode positive selon l'une quelconque des revendications 1 à 8, dans laquelle l'électrolyte solide est un composé représenté par la formule 6, un composé représenté par la formule 7, ou une combinaison de ceux-ci :

   Formule 6          $Li_{5+x}E_3(Me^1_zMe^2_{(2-z)})O_d$

   dans laquelle, dans la formule 6, E est un cation trivalent ;
   $Me^1$ et $Me^2$ sont chacun indépendamment choisis parmi un cation trivalent, un cation tétravalent, un cation pentavalent et un cation hexavalent ;
   0<x≤3, 0≤z<2 et 0<d≤12 ; et
   O est éventuellement partiellement ou totalement substitué par un anion pentavalent, un anion hexavalent, un anion heptavalent, ou une combinaison de ceux-ci :

   formule 7          $Li_{5+x+2y}(D_yE_{3-y})(Me^1_zMe^2_{2-z})O_d$

   dans laquelle, dans la formule 7, D est un cation monovalent ou un cation divalent ;
   E est un cation trivalent ;
   $Me^1$ et $Me^2$ sont chacun indépendamment un cation trivalent, un cation tétravalent, un cation pentavalent ou un cation hexavalent ;
   0<x+2y≤3, 0≤y≤0,5, 0≤z<2 et 0<d≤12 ; et
   O est éventuellement partiellement ou totalement substitué par un anion pentavalent.

10. Electrode positive selon l'une quelconque des revendications 1 à 9, dans laquelle une utilisation de l'électrode positive est de 80 % ou plus.

11. Ensemble d'électrode positive comprenant :

   l'électrode positive selon l'une quelconque des revendications 1 à 10 ; et
   un deuxième électrolyte solide disposé sur l'électrode positive,
   dans lequel le premier électrolyte solide et le deuxième électrolyte solide sont identiques ou différents l'un de l'autre ;
   de préférence dans lequel le premier électrolyte solide et le deuxième électrolyte solide sont chacun indépendamment un électrolyte solide de sulfure, un électrolyte solide oxyde, ou une combinaison de ceux-ci.

**12.** Batterie secondaire à semi-conducteurs comprenant l'électrode positive selon l'une quelconque des revendications 1 à 10 ; une électrode négative ; et un deuxième électrolyte solide disposé entre l'électrode positive et l'électrode négative, dans laquelle le premier électrolyte solide et le deuxième électrolyte solide sont identiques ou différents l'un de l'autre ;

de préférence dans lequel le premier électrolyte solide et le deuxième électrolyte solide sont chacun indépendamment un électrolyte solide de sulfure, un électrolyte solide oxyde, ou une combinaison de ceux-ci.

**13.** Procédé de préparation d'une électrode positive pour une batterie secondaire à semi-conducteurs, le procédé comprenant :

la fourniture d'une matière active positive ;
la fourniture d'un premier électrolyte solide ; et
la mise en contact du matériau actif positif et du premier électrolyte solide à une pression dans une plage de 50 mégaPascals (MPa) à 600 MPa pour fournir l'électrode positive selon l'une quelconque des revendications 1 à 10 pour une batterie secondaire à semi-conducteurs.

# FIG. 1

## FIG. 2

## FIG. 3

FIG. 4

FIG. 5

FIG. 6

FIG. 7

# FIG. 8

**Solid Electrolyte Content (wt%)**

**EP 3 680 959 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016181657 A
- US 2017092987 A
- US 2017092988 A
- DE 102014226396
- US 2013040206 A
- US 2018114979 A